# FASCICULE DE BREVET EUROPEEN

(11) **EP 3 010 793 B1**
(45) Date de publication et mention de la délivrance du brevet: **24.07.2019**
(21) Numéro de dépôt: 14739876.2
(22) Date de dépôt: 17.06.2014
(51) Int. Cl.: B62K 25/08, B62K 25/28, B60G 17/0165, B62K 25/04

(54) **SYSTEME DE SUSPENSION POUR BICYCLETTE**
FEDERUNGSSYSTEM FÜR EIN FAHRRAD
SUSPENSION SYSTEM FOR A BICYCLE

(30) Priorité: 17.06.2013 FR 1355619
(43) Date de publication de la demande: 27.04.2016
(73) Titulaire: Cycles Lapierre, 21000 Dijon (FR)
(72) Inventeur: LAPIERRE, Gilles, F-21160 Couchey (FR); GRIBAUDO, Rémi, F-21000 Dijon (FR)
(74) Mandataire: Gevers & Orès
(86) Numéro de dépôt international: PCT/FR2014/051489
(87) Numéro de publication internationale: WO 2014/202890

(56) Documents cités:
- FR-A1- 2 929 588
- US-A- 6 026 939
- US-A1- 2001 030 408
- US-A1- 2011 202 236

## Description

### DOMAINE TECHNIQUE

La présente invention concerne un système de suspension d'une bicyclette comportant au moins un amortisseur, du type comportant au moins un capteur et une unité de contrôle pilotant l'amortisseur avant de la bicyclette en fonction du signal transmis par ledit capteur.

### ART ANTERIEUR

On connaît bien des vélos tout terrain dits VTT comportant une suspension arrière constituée d'un bras oscillant articulé au niveau de la partie inférieure du tube de selle coopérant avec un amortisseur dit arrière. Ledit bras oscillant pivote autour d'un axe fixe parallèle à l'axe de pignons menants qui est porté par le boitier de pédalier positionné à l'extrémité inférieure du cadre, c'est-à-dire à l'intersection du tube oblique et du tube de selle de ce dernier. Par ailleurs, les extrémités de l'amortisseur sont solidaires du bras oscillant et respectivement du tube horizontal reliant le tube de selle à la fourche du vélo ou d'un tube intermédiaire s'étendant globalement du boitier de pédalier au tube horizontal, ledit tube de selle étant interrompu pour laisser le passage à l'amortisseur.

Ce type de suspension arrière provoque sous l'action d'un coup de pédale énergique tel qu'un coût de pédale pour relancer le vélo ou lorsque le cycliste adopte la position dite en danseuse debout sur les pédales, un effet dit de pompage qui se traduit par un enfoncement cyclique de la suspension même sur un sol parfaitement nivelé. Ce type de suspension arrière présente donc l'inconvénient de dissiper une partie du couple moteur fourni par le cycliste dans l'amortisseur au lieu de participer à l'avancement du vélo.

On connaît également des vélos tout terrain dits VTT dont la suspension arrière est constituée d'un bras oscillant articulé au tube de selle et/ou au tube oblique du cadran au moyen de deux biellettes ou similaire, ledit bras oscillant ou au moins l'une des biellettes coopérant avec un amortisseur. Ledit bras oscillant pivote autour d'un point de pivot virtuel mobile, également appelé centre instantané de rotation, qui correspond à l'intersection des droites passant par les axes respectifs des biellettes.

C'est le cas notamment de la demande de brevet américain US 2002/0109332, par exemple, qui décrit une telle suspension arrière de vélo. Le centre instantané se déplace dans le quadrant antérieur inférieur et se déplace d'avant en arrière et de haut en bas lorsque le bras oscillant se déplace vers le haut lors du franchissement d'un obstacle tel qu'une bosse par exemple. Une telle suspension arrière à centre instantané de rotation, également appelé point de pivot virtuel présente l'inconvénient de procurer un effet dit de pompage.

Afin de remédier à cet inconvénient, on a déjà imaginé une suspension arrière d'un véhicule ne procurant pas d'effet de pompage. C'est le cas notamment de la demande de brevet français FR 2 898 577 déposée par la demanderesse qui décrit une suspension arrière comportant un bras arrière oscillant portant le moyeu de la roue arrière et articulé par au moins deux moyens d'articulation à un cadre portant un boitier de pédalier. Le centre instantané de rotation se situe à proximité du brin tendu supérieur de la chaîne en position d'équilibre statique et se déplace à l'intérieur d'une bande horizontale de telle manière que ledit centre instantané se déplace horizontalement lorsque le bras oscillant se déplace vers le haut lors du franchissement d'un obstacle. Cette trajectoire du centre instantané de rotation procure un effet anti-pompage en créant un moment de rappel tendant à ramener le bras oscillant dans sa position d'équilibre statique lors du pédalage.

Toutefois, quel que soit le type de suspension arrière, c'est-à-dire un bras pivotant autour d'un point fixe ou pivotant au tour d'un point de pivot virtuel mobile, les amortisseurs conventionnels présentent plusieurs inconvénients. Un premier inconvénient est que les amortisseurs conventionnels sont configurés avec une loi d'amortissement dans laquelle la vitesse d'enfoncement est généralement fixe. La plupart des amortisseurs conventionnels comportent deux positions, une position ouverte dans laquelle la vitesse d'enfoncement est maximale et une position fermée dans laquelle la vitesse d'enfoncement est nulle, c'est-à-dire que l'amortisseur se comporte comme une pièce rigide. Ces différentes positions permettent d'adapter les propriétés de l'amortisseur en fonction de la nature du terrain. Par ailleurs, les amortisseurs conventionnels ne sont pas capables de différencier les mouvements de la roue dus au passage d'un obstacle avec les mouvements causés par les transferts de masse du cycliste sur le cadre du vélo.

Afin de remédier à ces inconvénients, on a déjà imaginé des systèmes de suspension comportant au moins un capteur connecté à une unité de contrôle et pilotant l'amortisseur arrière, et éventuellement l'amortisseur avant de la fourche avant, en fonction du signal transmis par ledit capteur, ledit capteur mesurant généralement une accélération pour détecter la rencontre d'une roue avec un obstacle.

C'est le cas notamment de la demande de brevet européen EP 1241 087, du brevet américain US 6,149,174 ou bien encore de la demande de brevet international WO 99/06231.

Tous ces systèmes de suspension arrière pilotés par l'unité de contrôle présentent néanmoins l'inconvénient de ne pas piloter les propriétés de l'amortisseur en fonction notamment du pédalage du cycliste.

Afin de remédier à cet inconvénient, on a déjà imaginé un système de suspension dans lequel les propriétés de l'amortisseur sont pilotées en fonction du pédalage du cycliste et de la détection des chocs rencontrés.

C'est le cas notamment de la demande de brevet français FR 2929588 déposée par la demanderesse qui décrit un système de suspension d'une bicyclette du type comportant un châssis dit cadre, d'une fourche avant comportant un amortisseur avant, d'un bras oscillant articulé au cadre et un amortisseur arrière, et d'au moins un capteur dit de choc, ledit capteur étant connecté à une unité de contrôle pilotant l'amortisseur avant et/ou arrière en fonction du signal transmis par ledit capteur ; ledit système est remarquable en ce qu'il comporte au moins des moyens de détection du pédalage dits capteur de pédalage connectés à l'unité de contrôle qui règle la commande de compression des amortisseurs arrière et/ou avant en fonction du signal de présence du pédalage et du signal de détection des chocs.

Ce type de système de suspension reste néanmoins insuffisamment réactif pour l'amortisseur avant.

### EXPOSE DE L'INVENTION

L'un des buts de l'invention est donc de remédier à ces inconvénients en proposant un système de suspension de la fourche avant d'une bicyclette de conception simple, peu onéreuse, permettant d'adapter les propriétés de l'amortisseur en fonction du pédalage du cycliste.

A cet effet, et conformément à l'invention, il est proposé un système de suspension d'une bicyclette selon la revendication 1.

Par ailleurs, ladite unité de contrôle règle la commande de compression de l'amortisseur avant dans la position fermée lorsqu'un pédalage est détecté par le capteur de pédalage, une vitesse de la fourche avant supérieure à un seuil déterminé est détectée et une accélération du bas de la fourche avant inférieure à un seuil déterminé est détectée.

Ladite unité de contrôle règle la commande de compression de l'amortisseur avant dans la position ouverte lorsqu'un pédalage est détecté par le capteur de pédalage, une vitesse de la fourche avant inférieure à un seuil déterminé est détectée et une accélération du bas de la fourche avant supérieure à un seuil déterminé est détectée.

De plus, ladite unité de contrôle règle la commande de compression de l'amortisseur avant dans la position ouverte lorsqu'un pédalage est détecté par le capteur de pédalage, une vitesse de la fourche avant supérieure à un seuil déterminé est détectée et une accélération du bas de la fourche avant supérieure à un seuil déterminé est détectée.

Selon une variante d'exécution, l'unité de contrôle règle la commande de compression de l'amortisseur avant dans une position intermédiaire dite médium lorsqu'un pédalage est détecté par le capteur de pédalage, une vitesse de la fourche supérieure à un seuil déterminé est détectée et une accélération du bas de la fourche supérieure à un seuil déterminé est détectée.

Par ailleurs, les moyens de détection de pédalage consistent en au moins une ampoule reed solidaire du cadre et en au moins un aimant permanent solidaire d'au moins une manivelle d'un boîtier de pédalier.

Alternativement, les moyens de détection du pédalage consistent en au moins un capteur magnéto inductif solidaire du cadre et en au moins un aimant permanent solidaire d'au moins une manivelle d'un boîtier de pédalier.

Selon une autre variante d'exécution, les moyens de détection du pédalage consistent en des moyens de mesure de la puissance de pédalage connectés à l'unité de contrôle qui règle la commande de compression de l'amortisseur avant en fonction de la puissance mesurée.

De préférence, le seuil déterminé de vitesse de la fourche avant est compris entre 0,4 et 1 m.s⁻¹ et le seuil déterminé de l'accélération du bas de la fourche avant (6) est compris entre 2 et 9g, et de préférence égal à 4g.

### DESCRIPTION SOMMAIRE DES FIGURES

D'autres avantages et caractéristiques ressortiront mieux de la description qui va suivre, de plusieurs variantes d'exécution, données à titre d'exemples non limitatifs, du système de suspension d'une bicyclette suivant l'invention, à partir des dessins annexés sur lesquels :
- La figure 1 est une vue de côté partiel d'une bicyclette équipée du système de suspension conforme à l'invention,
- La figure 2 est une représentation schématique du diagramme illustrant le système de suspension suivant l'invention,
- La figure 3 est une table de vérité de l'algorithme de l'unité de contrôle du système de suspension suivant l'invention,
- La figure 4 est une table de vérité d'une variante d'exécution de l'algorithme de l'unité de contrôle du système de suspension conforme à l'invention,
- La figure 5 est une table de vérité d'une seconde variante d'exécution de l'algorithme de l'unité de contrôle du système de suspension suivant l'invention.

### DESCRIPTION DETAILLEE DE L'INVENTION

On décrira ci-après le système de suspension suivant l'invention pour un vélo tout terrain, dit VTT, à point de pivot virtuel ; toutefois il est bien évident que le système de suspension pourrait être utilisé pour tout type de vélo comportant une suspension avant et une suspension arrière, tel qu'un VTT à point de pivot fixe, ou un VTT ne comportant qu'une suspension avant sans pour autant sortir du cadre de l'invention.

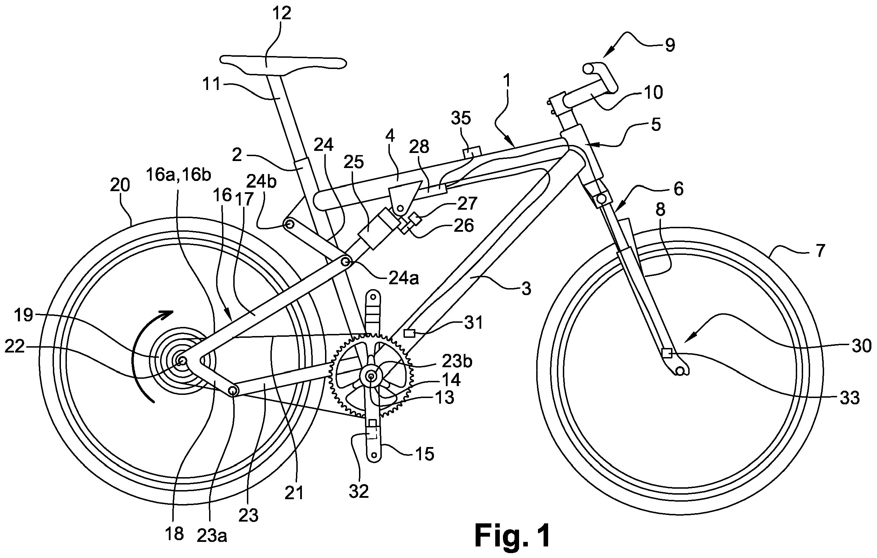

En référence à la figure 1, le VTT comprend un châssis 1 dit cadre triangulé constitué d'un tube de selle 2 globalement vertical, d'un tube oblique 3 assemblé par soudage à l'extrémité inférieure du tube de selle 2 et d'un tube horizontal 4 dont les extrémités sont assemblées par soudage à l'extrémité supérieure du tube de selle 2 et respectivement d'un tube de fourche 5 globalement vertical, le tube oblique 3 étant, par ailleurs, solidarisé audit tube de fourche 5 également par soudage. Ce tube de fourche 5 reçoit une fourche 6 du type télescopique portant à son extrémité inférieure l'axe du moyeu de la roue avant 7 du VTT. La fourche télescopique 6 comporte de manière usuelle un amortisseur dit avant 8. Un guidon 9 est de manière classique solidarisé à l'extrémité distale d'une potence 10 solidaire de l'extrémité supérieure de la fourche 6 pour assurer la direction du VTT. Il va de soi que le cadre 1 pourra présenter une forme quelconque telle qu'une forme de V couché ou une forme de L couché par exemple sans pour autant sortir du cadre de l'invention.

Le tube de selle 2 est apte à recevoir une tige de selle 11 comprenant à son extrémité supérieure une selle 12 sur laquelle prend position le cycliste.

Il va de soi que les différents tubes, tube de selle 2, tube oblique 3, tube horizontal 4, et tube de fourche 5, du cadre 1, peuvent être assemblés par tous moyens appropriés bien connus par l'homme du métier tel que par collage et/ou par emboitement par exemple.

L'extrémité inférieure dudit tube de selle 2, c'est-à-dire l'intersection du tube oblique 3 et du tube de selle 2 comporte un boitier de pédalier 13 portant de manière classique l'axe des pignons menants 14 communément appelés plateaux dont les axes de rotation sont coaxiaux, des pédales 15 étant solidaires de l'axe des pignons menants 14 de part et d'autre du cadre 1 du VTT.

Ledit VTT comporte, par ailleurs, un bras oscillant 16 constitué de deux ensembles 16a, 16b, en forme de V s'étendant de part et d'autre du plan médian du cadre 1. Lesdits ensembles 16a, 16b, sont reliés par une ou plusieurs entretoises non représentées sur la figure 1. Chaque ensemble 16a, 16b du bras oscillant 16 est constitué d'un tube oblique 17 dit hauban et d'un tube inférieur 18 connecté deux à deux par des soudures. L'intersection du hauban 17 et du tube inférieur 18 porte l'axe du moyeu 19 de la roue arrière 20. De manière classique ladite roue arrière 20 est entraînée en rotation par une chaîne de transmission 21 s'étendant entre les pignons menants 14 du boitier de pédalier 13 et des pignons menés 22 portés par l'axe du moyeu 19 de la roue arrière 20 motrice, lorsque le cycliste pédale. Il va de soi que le bras oscillant 16 peut présenter une forme quelconque telle qu'une forme triangulaire ou globalement rectiligne sans sortir du cadre de l'invention. Par ailleurs, ledit bras oscillant 16 est solidarisé au cadre 1 par deux moyens d'articulation 23 et 24.

Le premier moyen d'articulation 23 consiste en une biellette dite inférieure 23 dont les axes de rotation 23a et 23b positionnés aux extrémités libres de ladite biellette 23 sont respectivement articulés à l'extrémité libre du tube inférieur 18 du bras oscillant 16 au tube de selle 2 à proximité du boitier de pédalier 13. Le second moyen d'articulation 24 consiste en une biellette dite supérieure 24 dont les axes de rotation 24a, 24b positionnées aux extrémités de ladite biellette supérieurs sont respectivement articulées à l'extrémité libre antérieure du hauban 17 du bras oscillant 16 et au tube de selle 2, en dessous du tube horizontal 3 du cadre 1. Il va de soi que les moyens d'articulation 23, 24 pourront être substitués par d'autres moyens d'articulation équivalents tels qu'un excentrique, une lame flexible ou similaires, sans pour autant sortir du cadre de l'invention.

Le VTT comprend accessoirement un amortisseur dit arrière 25 dont les extrémités libres sont solidaires respectivement du tube horizontal 3 et de l'extrémité libre antérieure du hauban 17 du bras oscillant 16 ou de la biellette supérieure 24. On notera que, en fonction de l'architecture du cadre 1 et du bras oscillant 16, les extrémités de l'amortisseur arrière 25 pourront être solidaires d'une biellette de report et respectivement à l'un quelconque des tubes du cadre 1. Ledit amortisseur arrière 25 consiste en un amortisseur à compression variable comportant au moins trois positions, une position ouverte dans laquelle la compression est minimale, une position fermée dans laquelle la compression est nulle, et une position dite médium. Ce type d'amortisseur à compression variable comporte une valve de compression telle que décrite dans la demande américaine US 6 135 434 par exemple. De manière similaire, l'amortisseur avant 8 consiste en un amortisseur à compression variable comportant au moins deux positions, à savoir une position ouverte dans laquelle la compression est minimale et une position fermée dans laquelle la compression est nulle et, de préférence, trois positions, à savoir une position ouverte dans laquelle la compression est minimale, une position fermée dans laquelle la compression est nulle, et une position dite médium. Ce type d'amortisseur 8 à compression variable comporte une valve 26 de compression telle que décrite dans la demande de brevet américain US 2011/0012317 par exemple ou tout autre amortisseur similaire bien connu de l'homme du métier.

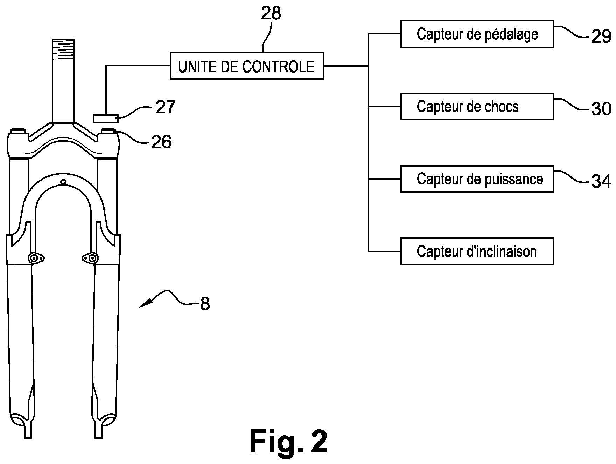

En référence à la figure 2, le système de suspension suivant l'invention comporte, par ailleurs, des moyens d'actionnement 27 de la valve de compression 26 consistant, par exemple, en un servomoteur piloté par une unité de contrôle 28. Cette unité de contrôle 28 comporte un algorithme qui détermine la commande de compression de l'amortisseur avant 8 en fonction d'un signal de présence de pédalage, d'un signal de vitesse de la fourche avant et d'un signal d'accélération de l'extrémité inférieure de la fourche avant, lesdits signaux étant déterminés par des moyens de détection de la présence de pédalage 29 et des moyens de détection des chocs 30.

Ces moyens de détection du pédalage 29 consistent, en référence aux figures 1 et 2, en une ampoule reed 31 solidaire du cadre 1, plus précisément solidaire du tube de selle 2 ou du tube oblique 3 à proximité du boitier de pédalier 13, et au moins un aimant permanent 32 solidaire de l'une ou des deux manivelles 15. Ce type de détecteur de la présence du pédalage présente une bonne sensibilité d'environ 2 mT et une surcharge magnétique suffisamment faible. De plus ce type de détecteur est particulièrement peu onéreux.

Selon une variante d'exécution, le système de suspension conforme à l'invention, le détecteur de la présence du pédalage à ampoule Reed peut avantageusement être substitué par un détecteur magnéto-inductif 31 consistant dans un capteur magnéto-inductif solidaire du cadre 1, à proximité du boitier de pédalier 13, et un aimant permanent 32 solidaire de l'une des manivelles. Ce type de détecteur présente l'avantage de présenter une résistance aux vibrations meilleures que les détecteurs de type à ampoule reed.

Les moyens de détection des chocs 30 consistent, par exemple, en au moins un accéléromètre 33 solidaire de l'extrémité libre inférieure de la fourche 6.

Selon une autre variante d'exécution du système de suspension suivant l'invention, les moyens de détection des chocs 30 peuvent consister dans un micro rupteur muni d'une languette à proximité de laquelle est solidarisée une masse. Cette masse est étalonnée de telle sorte qu'elle fasse fermer le contact pour une intensité de choc minimale déterminée. De manière avantageuse, les moyens de détection peuvent consister dans deux ou trois rupteurs respectivement munis d'une languette à l'extrémité de laquelle est solidaire une masse différente. Ainsi un premier micro rupteur permettra de détecter les faibles chocs et le second micro rupteur de détecter les gros chocs.

L'algorithme de l'unité de contrôle 28 détermine la position ouverte, fermée ou médium de l'amortisseur arrière 25 en fonction des signaux de présence du pédalage et de détection des chocs conformément aux enseignements de la demande de brevet français FR 2929588.

Il est bien évident que le VTT pourra ne pas comporter de suspension arrière 25 sans pour autant sortir du cadre de l'invention.

L'algorithme de l'unité de contrôle 28 détermine la position ouverte ou fermée et éventuellement médium de l'amortisseur avant 8 en fonction des signaux de présence du pédalage, d'un signal de vitesse de la fourche avant 6 et d'un signal de l'accélération de l'extrémité inférieure de la fourche avant 6.

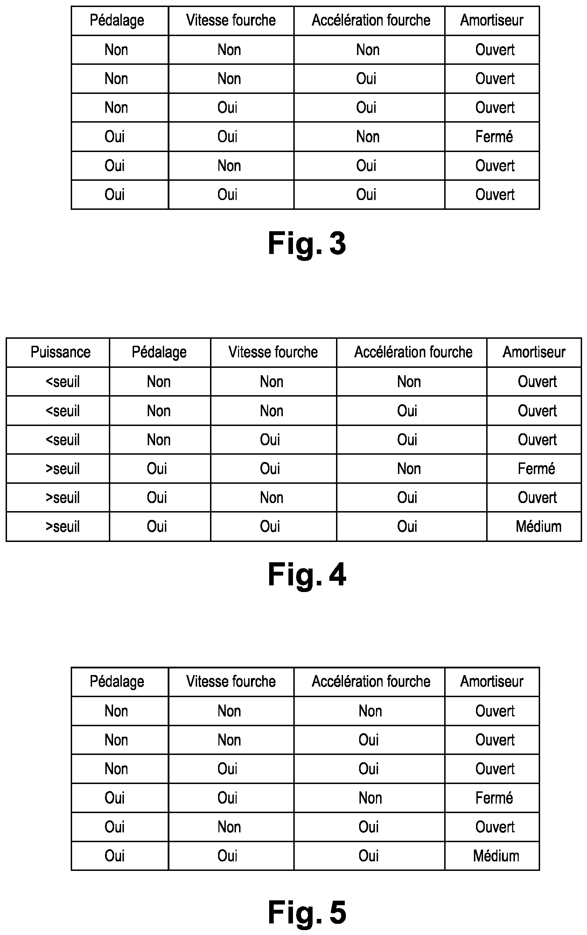

En référence à la figure 3, lorsqu'aucun pédalage n'est détecté, l'unité de contrôle 28 pilote l'amortisseur avant 8 en position ouverte que des chocs faibles, gros ou aucun choc n'aient été détectés par les moyens de détection des chocs 30, c'est-à-dire quelles que soient les mesures de la vitesse de la fourche avant 6 et de l'accélération de l'extrémité inférieure de la fourche avant 6. Lorsqu'un pédalage est détecté et qu'une vitesse de la fourche supérieure à un seuil déterminé est détectée et une accélération du bas de la fourche avant 6 inférieure à un seuil déterminé est détectée, l'unité de contrôle 28 pilote l'amortisseur avant 8 en position fermée empêchant ainsi toute compression de l'amortisseur avant 8. Lorsqu'un pédalage est détecté par le capteur de pédalage 29, une vitesse de la fourche supérieure ou inférieure à un seuil déterminé est détectée et une accélération du bas de la fourche supérieure à un seuil déterminé est détectée, l'unité de contrôle 28 règle la commande de compression de l'amortisseur 8 dans la position ouverte. Ledit seuil déterminé de vitesse de la fourche avant 6 est compris entre 0,4 et 1 m.s⁻¹, et de préférence égal à 0,7 m.s⁻¹ et le seuil déterminé de l'accélération du bas de la fourche avant 6 est compris entre 2 et 9g, et de préférence égal à 4g, dans lequel g est l'accélération de la pesanteur standard qui est égale à 9,80665 m.s⁻².

Il est bien évident que les seuils pourront être adaptés par l'homme du métier en fonction du comportement souhaité de l'amortisseur et des caractéristiques notamment des pneumatiques
Selon une autre variante d'exécution du système de suspension conforme à l'invention, en référence aux figures figure 1 et 4, les moyens de détection du pédalage précédemment décrit peuvent être substitués ou complétés par des moyens de détection de la puissance 34 développée par le cycliste lors du pédalage. Ces moyens de détection de la puissance 34 peuvent consistés par exemple en un capteur de puissance tel que commercialisé par la société POLAR par exemple. Ledit moyen de détection de la puissance 34 est connecté à l'unité de contrôle 28 qui reçoit un signal proportionnel à la puissance mesurée. En référence à la figure 4, l'algorithme de l'unité de contrôle 28 détermine alors si le signal reçu est inférieur ou supérieur à une valeur seuil afin de déterminer la présence ou non de pédalage. Par exemple, si la puissance mesurée par les moyens de mesure de la puissance est inférieure à un seuil de 100 watts par exemple, l'unité de contrôle 28 détermine qu'il n'y a pas de pédalage. A contrario, si la puissance mesurée est supérieure au seuil de 100 watts, l'unité de contrôle 28 détermine qu'il y a un pédalage. Alors, en référence à la figure 4, de la même manière que précédemment lorsqu'aucun pédalage n'est détecté l'unité de contrôle 28 pilote l'amortisseur avant 8 en position ouverte quel que soit la valeur de la vitesse de la fourche avant 8 et la valeur de l'accélération de l'extrémité inférieure de la fourche avant 6. De plus, lorsqu'un pédalage est détecté et qu'une vitesse de la fourche supérieure à un seuil déterminé est détectée et une accélération du bas de la fourche avant 6 inférieure à un seuil déterminé est détectée, l'unité de contrôle 28 pilote l'amortisseur avant 8 en position fermée empêchant ainsi toute compression de l'amortisseur avant 8. Lorsqu'un pédalage est détecté par le capteur de pédalage 29, une vitesse de la fourche supérieure ou inférieure à un seuil déterminé est détectée et une accélération du bas de la fourche supérieure à un seuil déterminé est détectée, l'unité de contrôle 28 règle la commande de compression de l'amortisseur 8 dans la position ouverte. Ledit seuil déterminé de vitesse de la fourche avant 6 est compris entre 0,4 et 1 m.s⁻¹, et de préférence égal à 0,7 m.s⁻¹, et le seuil déterminé de l'accélération du bas de la fourche avant 6 est compris entre 2 et 9g, et de préférence égal à 4g.

Selon une autre variante d'exécution, en référence à la figure 5, lorsqu'aucun pédalage n'est détecté, l'unité de contrôle 28 pilote l'amortisseur avant 8 en position ouverte que des chocs faibles, gros ou aucun choc n'aient été détectés par les moyens de détection des chocs 30, c'est-à-dire quelles que soient les mesures de la vitesse de la fourche avant 6 et de l'accélération de l'extrémité inférieure de la fourche avant 6. Lorsqu'un pédalage est détecté et qu'une vitesse de la fourche supérieure à un seuil déterminé est détectée et une accélération du bas de la fourche avant 6 inférieure à un seuil déterminé est détectée, l'unité de contrôle 28 pilote l'amortisseur avant 8 en position fermée empêchant ainsi toute compression de l'amortisseur avant 8. Lorsqu'un pédalage est détecté par le capteur de pédalage 29, une vitesse de la fourche inférieure à un seuil déterminé est détectée et une accélération du bas de la fourche supérieure à un seuil déterminé est détectée, l'unité de contrôle 28 règle la commande de compression de l'amortisseur 8 dans la position ouverte. Lorsqu'un pédalage est détecté par le capteur de pédalage 29, une vitesse de la fourche supérieure à un seuil déterminé est détectée et une accélération du bas de la fourche supérieure à un seuil déterminé est détectée, l'unité de contrôle 28 règle la commande de compression de l'amortisseur 8 dans la position médium. Ledit seuil déterminé de vitesse de la fourche avant 6 est compris entre 0,4 et 1 m.s⁻¹, et de préférence égal à 0,7 m.s⁻¹ et le seuil déterminé de l'accélération du bas de la fourche avant 6 est compris entre 2 et 9g, et de préférence égal à 4g.

Il est bien évident que, pour des raisons de simplification, les différents capteurs du système suivant l'invention sont connectés à l'unité de contrôle 28 par des moyens filaires ; toutefois, il va de soi que les différents capteurs pourront transmettre leurs signaux respectifs à l'unité de contrôle 28 par tous moyens de transmission sans fil bien connus de l'homme du métier tels que, par exemple, des connections Bluetooth® ou similaire, sans pour autant sortir du cadre de l'invention.

De plus, il est bien évident que l'amortisseur avant 6 consiste dans un amortisseur hydraulique qui pourrait être substitué par tout type d'amortisseur à compression variable, tel qu'un amortisseur électro magnétique par exemple.

Il va de soi que, pour un VTT comportant un bras oscillant (16) et une suspension arrière (25), ledit amortisseur arrière (25) pourra être piloté par l'unité de contrôle au moyen de l'un des algorithme précédemment décrit sans pour autant sortir du cadre ed l'invention.

## Revendications

1. Système de suspension d'une bicyclette comportant un châssis dit cadre (1), une fourche avant (6) portant l'axe du moyeu d'une roue avant directrice (7), un bras fixe ou un bras oscillant (16) articulé au cadre (1), portant l'axe du moyeu (19) d'une roue arrière motrice (20), le couple moteur étant transmis à la roue motrice (20) par une chaîne (21) s'étendant entre un pignon menant (14) solidaire du cadre et un pignon mené (22) solidaire de l'axe du moyeu (19) de la roue motrice (20), ledit système de suspension comprenant un premier amortisseur dit amortisseur avant (8), éventuellement un second amortisseur dit arrière (25) dont les extrémités sont aptes à être montées solidaires respectivement du cadre (1) et du bras oscillant (16), et au moins un capteur dit de choc (30) apte à déterminer le franchissement d'un obstacle par la roue directrice (7), ledit capteur (30) étant connecté à une unité de contrôle (28) pilotant l'amortisseur avant (8) et/ou arrière (25) en fonction du signal transmis par ledit capteur (30), ledit amortisseur avant (8) et/ou arrière (25) étant un amortisseur à compression variable comportant au moins trois positions, une position dite ouverte dans laquelle la compression est minimale, une position fermée dans laquelle la compression est nulle et une position dite médium, et des moyens de détection du pédalage dits capteur de pédalage (29) connectés à l'unité de contrôle (28) configurée pour règler la commande de compression de l'amortisseur avant (8) et/ou arrière (25) dans la position ouverte lorsqu'aucun pédalage n'est détecté par le capteur de pédalage (29), ***caractérisé* en ce que** l'unité de contrôle (28), lorsqu'un pédalage est détecté par le capteur de pédalage (29), est configurée pour régler la commande de compression de l'amortisseur avant (8) et/ou arrière (25) dans la position fermée ou ouverte, ou éventuellement médium, en fonction d'un signal de vitesse de la fourche avant (6) et d'un signal d'accélération de l'extrémité inférieure de la fourche avant (6), ces signaux étant déterminés par des moyens de détection des chocs (30) consistant en au moins un accéléromètre (33) solidaire de l'extrémité libre inférieure de la fourche (6).

2. Système de suspension d'une bicyclette suivant la revendication 1 ***caractérisé* en ce que** l'unité de contrôle (28) règle la commande de compression de l'amortisseur avant (8) dans la position fermée lorsqu'un pédalage est détecté par le capteur de pédalage (29), une vitesse de la fourche avant (6) supérieure à un seuil déterminé est détectée et une accélération du bas de la fourche avant (6) inférieure à un seuil déterminé est détectée.

3. Système de suspension d'une bicyclette suivant l'une quelconque des revendications 1 ou 2 ***caractérisé* en ce que** l'unité de contrôle (28) règle la commande de compression de l'amortisseur avant (8) dans la position ouverte lorsqu'un pédalage est détecté par le capteur de pédalage (29), une vitesse de la fourche avant (6) inférieure à un seuil déterminé est détectée et une accélération du bas de la fourche avant (6) supérieure à un seuil déterminé est détectée.

4. Système de suspension d'une bicyclette suivant l'une quelconque des revendications 1 à 3 ***caractérisé* en ce que** l'unité de contrôle (28) règle la commande de compression de l'amortisseur avant (8) dans la position ouverte lorsqu'un pédalage est détecté par le capteur de pédalage (29), une vitesse de la fourche avant (6) supérieure à un seuil déterminé est détectée et une accélération du bas de la fourche avant (6) supérieure à un seuil déterminé est détectée.

5. Système de suspension d'une bicyclette suivant l'une quelconque des revendications 1 à 3 ***caractérisé* en ce que** l'unité de contrôle (28) règle la commande de compression de l'amortisseur avant (8) dans une position intermédiaire dite médium lorsqu'un pédalage est détecté par le capteur de pédalage (29), une vitesse de la fourche supérieure à un seuil déterminé est détectée et une accélération du bas de la fourche supérieure à un seuil déterminé est détectée.

6. Système de suspension d'une bicyclette suivant l'une quelconque des revendications 1 à 5 ***caractérisé* en ce que** les moyens de détection de pédalage (29) consistent en au moins une ampoule reed (31) solidaire du cadre (1) et en au moins un aimant permanent (32) solidaire d'au moins une manivelle (15) d'un boîtier de pédalier (13).

7. Système de suspension d'une bicyclette suivant l'une quelconque des revendications 1 à 5 ***caractérisé* en ce que** les moyens de détection du pédalage (29) consistent en au moins un capteur magnéto inductif (31) solidaire du cadre et en au moins un aimant permanent (32) solidaire d'au moins une manivelle (15) d'un boîtier de pédalier (13).

8. Système de suspension d'une bicyclette suivant l'une quelconque des revendications 1 à 5 ***caractérisé* en ce que** les moyens de détection du pédalage (29) consistent en des moyens de mesure de la puissance de pédalage (34) connectés à l'unité de contrôle (28) qui règle la commande de compression de l'amortisseur avant (8) en fonction de la puissance mesurée.

9. Système de suspension d'une bicyclette suivant l'une quelconque des revendications 2 à 8 ***caractérisé* en ce que** le seuil déterminé de vitesse de la fourche avant (6) est compris entre 0,4 et 1 m.s⁻¹.

10. Système de suspension d'une bicyclette suivant l'une quelconque des revendications 2 à 9 ***caractérisé* en ce que** le seuil déterminé de l'accélération du bas de la fourche avant (6) est compris entre 2 et 9g.

11. Système de suspension d'une bicyclette suivant la revendication 10 ***caractérisé* en ce que** le seuil déterminé de l'accélération du bas de la fourche avant (6) est de 4g.

## Patentansprüche

1. Federungssystem für ein Fahrrad, ein als Rahmen (1) bezeichnetes Gestell, eine vordere Gabel (6), welche die Nabenachse eines gelenkten Vorderrads (7) trägt, einen feststehenden Arm oder einen am Rahmen (1) angelenkten Schwingarm (16), der die Nabenachse (19) eines hinteren Antriebsrads (20) trägt, beinhaltend, wobei das Antriebsdrehmoment durch eine Kette (21), die sich zwischen einem Treibritzel (14), das fest mit dem Rahmen verbunden ist, und einem Abtriebsritzel (22), das fest mit der Nabenachse (19) des Antriebsrads (20) verbunden ist, erstreckt, auf das Antriebsrad (20) übertragen wird, wobei das Federungssystem einen als vorderen Stoßdämpfer (8) bezeichneten ersten Stoßdämpfer, eventuell einen als hinteren (25) bezeichneten zweiten Stoßdämpfer, dessen Enden geeignet sind, jeweils fest verbunden mit dem Rahmen (1) und dem Schwingarm (16) montiert zu werden, und mindestens einen sogenannten Stoßsensor (30) umfasst, der geeignet ist, das Überfahren eines Hindernisses durch das gelenkte Rad (7) zu bestimmen, wobei der Sensor (30) mit einer Kontrolleinheit (28) verbunden ist, die den vorderen (8) und/oder hinteren (25) Stoßdämpfer abhängig vom durch den Sensor (30) übertragenen Signal ansteuert, wobei der vordere (8) und/oder hintere (25) Stoßdämpfer ein Stoßdämpfer mit variabler Verdichtung ist, der mindestens drei Positionen, eine als offen bezeichnete Position, in welcher die Verdichtung minimal ist, eine geschlossene Position, in der die Verdichtung gleich null ist, und eine als mittlere bezeichnete Position, und als Pedaltrittsensor (29) bezeichnete Pedaltritt-Erkennungsmittel beinhaltet, die mit der Kontrolleinheit (28) verbunden sind, konfiguriert, um die Verdichtungssteuerung des vorderen (8) und/oder hinteren (25) Stoßdämpfers in die offene Position zu regeln, wenn durch den Pedaltrittsensor (29) kein Pedaltritt erkannt wird, **dadurch gekennzeichnet, dass** die Kontrolleinheit (28), wenn durch den Pedaltrittsensor (29) ein Pedaltritt erkannt wird, konfiguriert ist, um die Verdichtungssteuerung des vorderen (8) und/oder hinteren (25) Stoßdämpfers in die geschlossene oder offene oder eventuell mittlere Position, abhängig von einem Geschwindigkeitssignal der vorderen Gabel (6) und von einem Beschleunigungssignal des unteren Endes der vorderen Gabel (6), zu regeln, wobei diese Signale durch Stoßerkennungsmittel (30) bestimmt werden, die aus mindestens einem Beschleunigungsmesser (33) bestehen, der fest mit dem freien unteren Ende der Gabel (6) verbunden ist.

2. Federungssystem für ein Fahrrad nach Anspruch 1, **dadurch gekennzeichnet, dass** die Kontrolleinheit (28) die Verdichtungssteuerung des vorderen Stoßdämpfers (8) in die geschlossene Position regelt, wenn durch den Pedaltrittsensor (29) ein Pedaltritt erkannt wird, eine Geschwindigkeit der vorderen Gabel (6), die höher als ein bestimmter Schwellenwert ist, erkannt wird, und eine Beschleunigung des unteren Teils der vorderen Gabel (6), die niedriger als ein bestimmter Schwellenwert ist, erkannt wird.

3. Federungssystem für ein Fahrrad nach einem der Ansprüche 1 oder 2, **dadurch gekennzeichnet, dass** die Kontrolleinheit (28) die Verdichtungssteuerung des vorderen Stoßdämpfers (8) in die offene Position regelt, wenn durch den Pedaltrittsensor (29) ein Pedaltritt erkannt wird, eine Geschwindigkeit der vorderen Gabel (6), die niedriger als ein bestimmter Schwellenwert ist, erkannt wird, und eine Beschleunigung des unteren Teils der vorderen Gabel (6), die höher als ein bestimmter Schwellenwert ist, erkannt wird.

4. Federungssystem für ein Fahrrad nach einem der Ansprüche 1 bis 3, **dadurch gekennzeichnet, dass** die Kontrolleinheit (28) die Verdichtungssteuerung des vorderen Stoßdämpfers (8) in die offene Position regelt, wenn durch den Pedaltrittsensor (29) ein Pedaltritt erkannt wird, eine Geschwindigkeit der vorderen Gabel (6), die höher als ein bestimmter Schwellenwert ist, erkannt wird, und eine Beschleunigung des unteren Teils der vorderen Gabel (6), die höher als ein bestimmter Schwellenwert ist, erkannt wird.

5. Federungssystem für ein Fahrrad nach einem der Ansprüche 1 bis 3, **dadurch gekennzeichnet, dass** die Kontrolleinheit (28) die Verdichtungssteuerung des vorderen Stoßdämpfers (8) in eine als mittlere bezeichnete Zwischenposition regelt, wenn durch den Pedaltrittsensor (29) ein Pedaltritt erkannt wird, eine Geschwindigkeit der Gabel, die höher als ein bestimmter Schwellenwert ist, erkannt wird, und eine Beschleunigung des unteren Teils der Gabel, die höher als ein bestimmter Schwellenwert ist, erkannt wird.

6. Federungssystem für ein Fahrrad nach einem der Ansprüche 1 bis 5, **dadurch gekennzeichnet, dass** die Pedaltritt-Erkennungsmittel (29) aus mindestens einem Reed-Schalter (31), der fest mit dem Rahmen (1) verbunden ist, und aus mindestens einem Dauermagneten (32) bestehen, der fest mit mindestens einer Kurbel (15) eines Tretlagergehäuses (13) verbunden ist.

7. Federungssystem für ein Fahrrad nach einem der Ansprüche 1 bis 5, **dadurch gekennzeichnet, dass** die Pedaltritt-Erkennungsmittel (29) aus mindestens einem magnetinduktiven Sensor (31), der fest mit dem Rahmen verbunden ist, und aus mindestens einem Dauermagneten (32) bestehen, der fest mit mindestens einer Kurbel (15) eines Tretlagergehäuses (13) verbunden ist.

8. Federungssystem für ein Fahrrad nach einem der Ansprüche 1 bis 5, **dadurch gekennzeichnet, dass** die Pedaltritt-Erkennungsmittel (29) aus Messmitteln der Pedaltrittkraft (34) bestehen, die mit der Kontrolleinheit (28) verbunden sind, welche die Verdichtungssteuerung des vorderen Stoßdämpfers (8) abhängig von der gemessenen Kraft regelt.

9. Federungssystem für ein Fahrrad nach einem der Ansprüche 2 bis 8, **dadurch gekennzeichnet, dass** der bestimmte Geschwindigkeitsschwellenwert der vorderen Gabel (6) zwischen 0,4 und 1 m/s⁻¹ enthalten ist.

10. Federungssystem für ein Fahrrad nach einem der Ansprüche 2 bis 9, **dadurch gekennzeichnet, dass** der bestimmte Beschleunigungsschwellenwert des unteren Teils der vorderen Gabel (6) zwischen 2 und 9 g enthalten ist.

11. Federungssystem für ein Fahrrad nach Anspruch 10, **dadurch gekennzeichnet, dass** der bestimmte Beschleunigungsschwellenwert des unteren Teils der vorderen Gabel (6) 4 g ist.

## Claims

1. Suspension system for a bicycle comprising a chassis called frame (1), a front fork (6) carrying the hub shaft of a front steering wheel (7), a fixed arm or an oscillating arm (16) articulated to the frame (1), carrying the hub shaft (19) of a rear drive wheel (20), the drive torque being transmitted to the drive wheel (20) by a chain (21) extending between a drive gear (14) secured to the frame and a driven gear (22) secured to the hub shaft (19) of the drive wheel (20), said suspension system comprising a first shock absorber called front shock absorber (8), possibly a second shock absorber called rear absorber (25), the ends of which are capable of being mounted secured respectively to the frame (1) and to the oscillating arm (16), and at least one sensor called shock sensor (30) capable of determining the avoidance of an obstacle by the steering wheel (7), said sensor (30) being connected to a control unit (28) controlling the front (8) and/or rear (25) shock absorber according to the signal transmitted by said sensor (30), said front (8) and/or rear (25) shock absorber being a variable compression shock absorber comprising at least three positions, a position called open position, wherein the compression is minimal, a closed position, wherein the compression is zero and a position called medium position, and means for detecting pedalling called pedalling sensor (29) connected to the control unit (28) configured to adjust the compression control of the front (8) and/or rear (25) shock absorber in the open position when no pedalling is detected by the pedalling sensor (29), **characterised in that** the control unit (28), when pedalling is detected by the pedalling sensor (29), is configured to adjust the compression control of the front (8) and/or rear (25) shock absorber in the closed or open position, or possibly medium, according to a speed signal of the front fork (6) and an acceleration signal of the bottom end of the front fork (6), these signals being determined by means for detecting shocks (30) consisting of at least one accelerometer (33) secured to the free bottom end of the fork (6).

2. Suspension system for a bicycle according to claim 1, **characterised in that** the control unit (28) adjusts the compression control of the front shock absorber (8) in the closed position when pedalling is detected by the pedalling sensor (29), when a speed of the front fork (6) greater than a determined threshold is detected and when an acceleration of the bottom of the front fork (6) less than a determined threshold is detected.

3. Suspension system for a bicycle according to any one of claims 1 or 2, **characterised in that** the control unit (28) adjusts the compression control of the front shock absorber (8) in the open position when pedalling is detected by the pedalling sensor (29), when a speed of the front fork (6) less than a determined threshold is detected and when an acceleration of the bottom of the front fork (6) greater than a determined threshold is detected.

4. Suspension system for a bicycle according to any one of claims 1 to 3, **characterised in that** the control unit (28) adjusts the compression control of the front shock absorber (8) in the open position when pedalling is detected by the pedalling sensor (29), when a speed of the front fork (6) greater than a determined threshold is detected and when an acceleration of the bottom of the front fork (6) greater than a determined threshold is detected.

5. Suspension system for a bicycle according to any one of claims 1 to 3, **characterised in that** the control unit (28) adjusts the compression control of the front shock absorber (8) in an intermediate position called medium position when pedalling is detected by the pedalling sensor (29), when a speed of the fork greater than a determined threshold is detected and when an acceleration of the bottom of the fork greater than a determined threshold is detected.

6. Suspension system for a bicycle according to any one of claims 1 to 5, **characterised in that** the means for detecting pedalling (29) consist of at least one reed switch (31) secured to the frame (1) and of at least one permanent magnet (32) secured to at least one crank (15) of a pedal casing (13).

7. Suspension system for a bicycle according to any one of claims 1 to 5, **characterised in that** the means for detecting pedalling (29) consist of at least one inductive magnetic sensor (31) secured to the frame and of at least one permanent magnet (32) secured to at least one crank (15) of a pedal casing (13).

8. Suspension system for a bicycle according to any one of claims 1 to 5, **characterised in that** the means for detecting pedalling (29) consist of means for measuring the pedalling power (34) connected to the control unit (28), which adjusts the compression control of the front shock absorber (8) according to the power measured.

9. Suspension system for a bicycle according to any one of claims 2 to 8, **characterised in that** the determined speed threshold of the front fork (6) is between 0.4 and 1 m.s⁻¹.

10. Suspension system for a bicycle according to any one of claims 2 to 9, **characterised in that** the determined threshold of the acceleration of the bottom of the front fork (6) is between 2 and 9 g.

11. Suspension system for a bicycle according to claim 10, **characterised in that** the determined threshold of the acceleration of the bottom of the front fork (6) is 4 g.
